# EUROPEAN PATENT APPLICATION

(11) **EP 4 550 748 A1**
(43) Date of publication of application: **07.05.2025**
(21) Application number: 24208741.9
(22) Date of filing: 24.10.2024
(51) Int. Cl.: H04L 45/02, H04L 45/12

(54) **CONTINUITY INFORMATION INCLUDED IN METRIC DATA ELEMENT OF A NON-TRANSITIVE ATTRIBUTE**

(30) Priority: 03.11.2023 IN 202341075094; 29.12.2023 US 202318400434
(71) Applicant: Juniper Networks, Inc., Sunnyvale, CA 94089-1206 (US)
(72) Inventor: HEDGE, Shraddha, Sunnyvale, 94089 (US); SANGLI, Srihari Ramachandra, Sunnyvale, 94089 (US)
(74) Representative: D Young & Co LLP

(57) **Abstract**

In some implementations, a border gateway protocol (BGP) network device may receive from an originator BGP network device via a first other BGP network device, a first message, wherein the first message includes first attribute data associated with a non-transitive attribute, wherein the first attribute data comprises a first metric data element that is associated with a metric data element format and that indicates a metric type, a metric value, and continuity information. The BGP may process the first message to determine first path information associated with a first path from the BGP network device to the originator BGP network device via the first other BGP network device.

## Description

### CROSS-REFERENCE TO RELATED APPLICATION

This Patent Application claims priority to India Patent Application No. 202341075094, filed on November 3, 2023, and entitled "EXTENSION TO ACCUMULATED INTERIOR GATEWAY PROTOCOL ATTRIBUTE TO CARRY ENHANCED GENERIC-METRIC TYPE-LENGTH-VALUE." The disclosure of the prior Application is considered part of and is incorporated by reference into this Patent Application.

### BACKGROUND

Border gateway protocol (BGP) is a standardized exterior gateway protocol that is used to exchange routing and reachability information among different autonomous systems (ASes).

### SUMMARY

Particular embodiments are set out in the independent claims. Various optional examples are set out in the dependent claims. In some implementations, a method includes receiving, by a BGP network device, from an originator BGP network device via a first other BGP network device, a first message, wherein the first message includes first attribute data associated with a non-transitive attribute, wherein the first attribute data comprises a first metric data element that is associated with a metric data element format and that indicates a metric type, a metric value, and continuity information; and processing, by the BGP network device, the first message to determine first path information associated with a first path from the BGP network device to the originator BGP network device via the first other BGP network device.

In some implementations, a BGP network device includes one or more memories; and one or more processors to: generate a first message that includes first attribute data associated with a non-transitive attribute, wherein the first attribute data comprises a first metric data element that is associated with a metric data element format and that indicates a metric type, a metric value, and continuity information; and send the first message to a first other BGP network device.

In some implementations, a non-transitory computer-readable medium storing a set of instructions includes one or more instructions that, when executed by one or more processors of a BGP network device, cause the BGP network device to: receive, from an originator BGP network device, a message, wherein the message includes attribute data associated with a non-transitive attribute, wherein the attribute data comprises a metric data element that is associated with a metric data element format that indicates a metric type, a metric value, and continuity information; update the metric data element of the attribute data of the message; and send the message to another BGP network device.

### BRIEF DESCRIPTION OF THE DRAWINGS

Figs. 1A-1B are diagrams of an example implementation associated with continuity information included in a metric data element of a non-transitive attribute.
Fig. 2 is a diagram of an example environment in which systems and/or methods described herein may be implemented.
Fig. 3 is a diagram of example components of a device associated with systems and/or methods described herein.
Fig. 4 is a diagram of example components of a device associated with systems and/or methods described herein.
Fig. 5 is a flowchart of an example process associated with continuity information included in a metric data element of a non-transitive attribute.
Fig. 6 is a flowchart of an example process associated with continuity information included in metric data element of a non-transitive attribute.
Fig. 7 is a flowchart of an example process associated with continuity information included in metric data element of a non-transitive attribute.

### DETAILED DESCRIPTION

The following detailed description of example implementations refers to the accompanying drawings. The same reference numbers in different drawings may identify the same or similar elements.

There are many routing protocols that have been designed to run within a single administrative domain, known collectively as interior gateway protocols (IGPs). Typically, each link is assigned a particular "metric" value. The path between two nodes can then be assigned a "distance," which is the sum of the metrics of all the links that belong to that path. An IGP selects the "shortest" (e.g., a minimal distance) path between any two nodes.

Border gateway protocol (BGP), in contrast to IGPs, runs over an arbitrarily large number of administrative domains, often referred to as autonomous systems (ASs). BGP does not inherently make its path-selection decisions based on a metric; there is no such thing as an "inter-AS metric." However, an accumulated IGP (AIGP) attribute can be used to accumulate IGP cost across domains. This is useful to establish end-to-end path cost across the domains.

The AIGP attribute is a non-transitive attribute and can be forwarded by a BGP network device to a neighbor BGP network device when the BGP network device is enabled to advertise AIGP. However, when AIGP is not enabled on the neighbor BGP network device, or is not configured to understand the AIGP attribute, the neighbor BGP network device cannot propagate the AIGP attribute, and hence end-to-end path metric accumulation does not occur. This is referred to as a "continuity" problem, where an end-to-end path cost cannot be accurately determined.

Consequently, in order to obtain end-to-end path cost, one has to enable AIGP on all network devices along a path across domains (e.g., on all network devices that change a "next hop" of a packet transiting the path). In addition to upgrading all the network devices to support AIGP, the network devices also need to be configured to enable propagating the accumulated cost. Until all the network devices are upgraded and configured, the end-to-end path cost cannot be computed, propagated, and used to influence best path decisions (e.g., because a receiver network device cannot determine whether the accumulated cost is a full accumulated cost associated with the path, or only a partial accumulated cost associated with the path).

Some implementations described herein include a plurality of BGP network devices, such as an originator BGP network device, a plurality of intermediate BGP network devices, and a receiver BGP network device. The originator BGP network device generates a message (e.g., a BGP update message) that includes attribute data associated with a non-transitive attribute, such as an AIGP attribute. The attribute data comprises a metric data element that is associated with a metric data element format, such as an AIGP sub-attribute type-length-value (TLV) (this is also referred to as a "Generic-Metric TLV"). The metric data element indicates a metric type (e.g., a "cost" parameter or a "benefit" parameter), a metric value (e.g., a "quantitative value" or "amount" of the metric type), and continuity information (e.g., a continuity bit) that indicates that the originator BGP network device supports the non-transitive attribute and the metric data element format for the metric type.

The originator BGP network device then sends the message to cause the message to be forwarded to the receiver BGP network device via one or more intermediate BGP network devices. Accordingly, each time an intermediate BGP network device receives the message, the intermediate BGP network device updates the message. For example, when the intermediate BGP network device supports (e.g., is configured to read and update) the non-transitive attribute and the metric data element format, the intermediate BGP network device updates the metric value (e.g., by adding, or by "accumulating," a metric value that is associated with the intermediate BGP network device to the metric value). As another example, when the intermediate BGP network device does not support (e.g., is not configured to read and update) the non-transitive attribute and the metric data element format, the intermediate BGP network device updates the continuity information to indicate that the device does not support the non-transitive attribute and the metric data element format (and the intermediate BGP network device does not update the metric value). Notably, once the continuity information is set to indicate that an intermediate BGP network device does not support the non-transitive attribute and the metric data element format (e.g., by changing a continuity bit from "0" (zero) to "1" (one), any subsequent intermediate BGP network device cannot reset the continuity information (e.g., reset the continuity bit back to "0" (zero)). This assures that the continuity information indicates that the accumulated metric value is a partial accumulated metric value.

Accordingly, when the receiver BGP network device receives the message (e.g., along a path from the receiver BGP network device to the originator BGP network device via one or more intermediate BGP network devices), the metric value of the metric data element of the message indicates a sum of metric values associated with the BGP network devices along the path that support the non-transitive attribute and the metric data element format. Further, the continuity information of the metric data element of the message indicates whether each BGP network device along the path supports the non-transitive attribute and the metric data element format. Accordingly, the receiver BGP network device determines path information that indicates an accumulated metric value (e.g., for the metric type and that is associated with the path) and whether the accumulated metric value is a full accumulated metric value or a partial accumulated metric value.

The receiver BGP network device can then make a route selection determination based on the path information (and on other path information associated with other paths to the originator BGP network device). Because the receiver BGP network device has information indicating whether the accumulated metric value is a full accumulated metric value or a partial accumulated metric value for the metric type (which is not available using current AIGP attribute practices), the receiver BGP network device may select a path that satisfies one or more criteria associated with the metric type. For example, the receiver BGP network device may only compare (e.g., using a metric value ranking technique) paths along which each BGP network device supports the non-transitive attribute and the metric data element format for the metric type, such as because the respective accumulated metric values of the paths are deemed to be accurate.

In this way, the continuity problem described herein is addressed. Further, some implementations ensure selection of an optimized path (e.g., for a particular parameter metric), which can improve a performance of routing traffic from the receiving BGP network device to the originator network device.

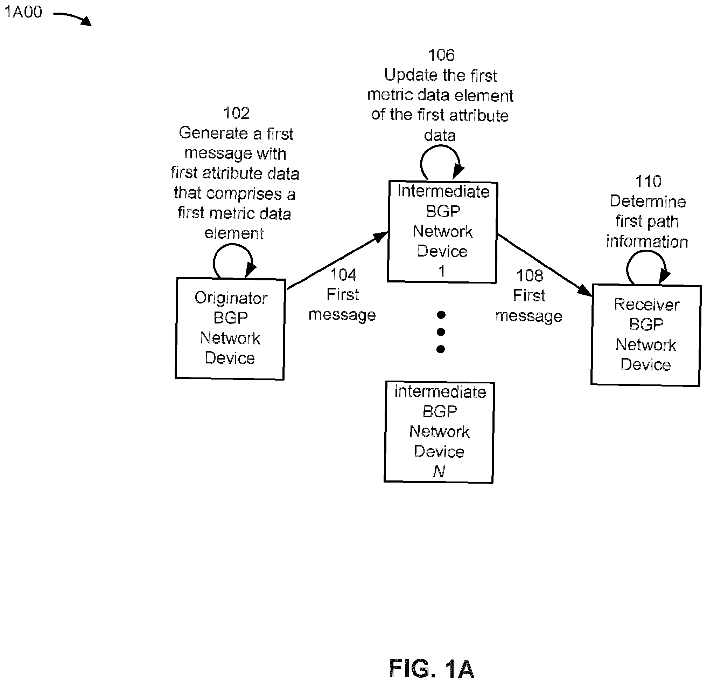

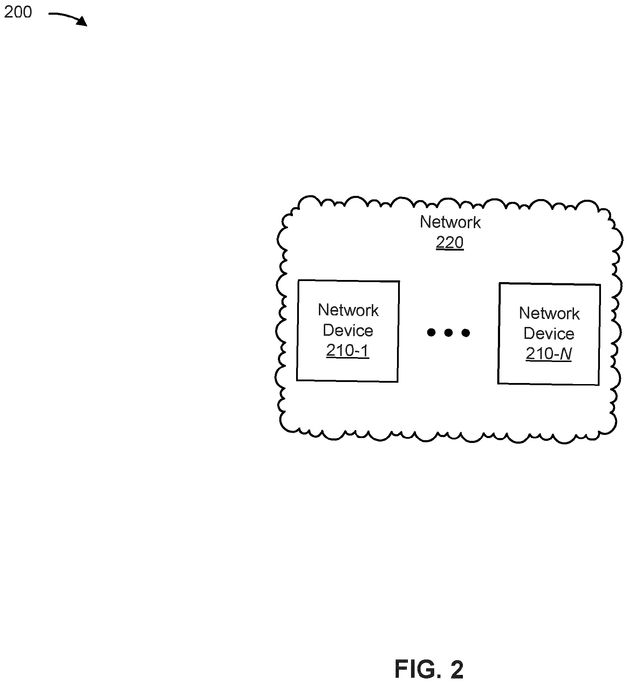

Figs. 1A-1B are diagrams of an example implementation 100 associated with continuity information included in a metric data element of a non-transitive attribute. As shown in Figs. 1A-1B, example implementation 100 includes a plurality of network devices. The plurality of network devices may include, for example, an originator BGP network device, a receiver BGP network device, and a plurality of intermediate BGP network devices (shown as intermediate BGP network device 1 through N, where *N* ≥ 2). These devices are described in more detail below in connection with Figs. 2-4.

As shown in Fig. 1A, and by reference number 102, the originator BGP network device may generate a first message. The first message may be, for example, a BGP update message or another type of message that includes availability information associated with the originator BGP network device. In some implementations, the first message may include first attribute data associated with a non-transitive attribute, such as an AIGP attribute or another type of non-transitive attribute. The first attribute data may include a first metric data element that is associated with a metric data element format, such as an AIGP sub-attribute TLV (also referred to as a "Generic-Metric TLV") or another type of metric data element format. The first metric data element may indicate a metric type (e.g., a "cost" parameter or a "benefit" parameter, for which the metric data element is associated, such as a bandwidth metric type, a latency metric type, a power metric type, or another metric type), a first metric value (e.g., a "quantitative value" or "amount" of the metric type, such as amount of a bandwidth metric type, an amount of a latency metric type, an amount of a power metric type, or another amount, associated with the originator BGP network device), and/or first continuity information (e.g., a first continuity "bit," such as set to a value of "0" (zero), or another indicator, that indicates that the originator BGP network device supports the non-transitive attribute and the metric data element format for the metric type). Accordingly, the first message may include an AIGP attribute that includes an AIGP sub-attribute TLV that comprises continuity information that indicates that the originator BGP network device supports both the AIGP attribute and the AIGP sub-attribute TLV (e.g., for a metric type indicated by the AIGP sub-attribute TLV).

Notably, the first attribute data may include one or more other first metric data elements (e.g., that are similar to the first metric data element, but that indicate different metric types, metric vales, and continuity information). For example, the first message may include an AIGP attribute that includes one or more AIGP sub-attribute TLV (e.g., that are each associated with different respective metric types). While additional details described herein are directed to only the first metric data element, each BGP network device described may treat the one or more other first metric data elements in a similar manner.

As shown by reference number 104, the originator BGP network device may send the first message. The originator BGP network device may send the first message to a first other BGP network device, such as the intermediate BGP network device 1 shown in Fig. 1A. The originator BGP network device may send the first message to the first other BGP network device via a connection between the originator BGP network device and the first other BGP network device. Accordingly, the first other BGP network device may receive the first message from the originator BGP network device (e.g., via the connection between the originator BGP network device and the first other BGP network device).

As shown by reference number 106, the first other BGP network device (e.g., the intermediate BGP network device 1 shown in Fig. 1A) may update the first metric data element of the first attribute data of the first message. In some implementations, the first other BGP network device may update the first metric value and/or the first continuity information of the first metric data element. For example, when the first other BGP network device supports the non-transitive attribute and the metric data element format, the first other BGP network device may update the first metric value (e.g., by adding, or by "accumulating," a metric value for the metric type that is associated with the connection between the originator BGP network device and the first other BGP network device to the first metric value). The first other BGP network device may also update the first continuity information to cause the first continuity information to indicate that the first other BGP network device, as well as the originator BGP network device, each support the non-transitive attribute and the metric data element format (e.g., for the metric type). When the first continuity information is a first continuity bit, the first other BGP network device may update the first continuity information by recommitting a value of the continuity bit (e.g., recommitting a "0" (zero) as "0" (zero), or a "1" (one) as "1" (one)).

As another example, when the first other BGP network device does not support at least one of the non-transitive attribute or the metric data element format, the first other BGP network device may update (e.g., may only update) the first continuity information to cause the first continuity information to indicate that the first other BGP network device does not support the non-transitive attribute and the metric data element format (e.g., for the metric type). When the first continuity information is a second continuity bit, the first other BGP network device may update the first continuity information by changing a value of the continuity bit (e.g., changing a "0" (zero) to a "1" (one)).

As shown by reference number 108, the first other BGP network device (e.g., the intermediate BGP network device 1) may send the first message. The first other BGP network device may send the first message to the receiver BGP network device, as shown in Fig. 1A. The first other BGP network device may send the first message to the receiver BGP network device via a connection between the first other BGP network device and the receiver BGP network device. Accordingly, the receiver BGP network device may receive the first message from the first other BGP network device (e.g., via the connection between the first other BGP network device and the receiver BGP network device).

In this way, the first message may be forwarded to the receiver BGP network device. While Fig. 1A shows the first message being received and forwarded by a single first other BGP network device, the first message may be received by and forwarded by one or more additional other BGP network devices before being sent to the receiver BGP network device. A first path (e.g., a traffic forwarding path) from the receiver BGP network device to the originator BGP network device then may include the first other BGP network device and, when present, the one or more additional first other BGP network devices.

Accordingly, each of the one or more additional first other BGP network devices may receive, update, and send the first message in a similar manner as that described herein in relation to the first other BGP network device (e.g., in association with reference numbers 104, 106, and 108). In this way, when a particular first other BGP network device of the first path receives the first message from another particular first other BGP network device of the first path, the first continuity information of the first message may indicate whether each BGP network device, along the first path from the other particular first other BGP network device to the originator BGP network device supports, for the metric type, the non-transitive attribute and the metric data element format (e.g., supports the AIGP attribute and the AIGP sub-attribute TLV). For example, when the first continuity information is a first continuity bit that has a value of "0" (zero), each BGP network device along the first path from the other particular first other BGP network device to the originator BGP network device supports the non-transitive attribute and the metric data element format and therefore recommitted the value of the first continuity bit (e.g., recommitted "0" (zero) as "0" (zero)). As an alternative example, when the first continuity information is a first continuity bit that has a value of "1" (one), at least one BGP network device along the first path from the other particular first other BGP network device to the originator BGP network device does not support the non-transitive attribute and the metric data element format and therefore changed the value of the first continuity bit (e.g., from "0" (zero) to "1" (one)).

Further, the first continuity information of the first metric data element of the first message, when received by the receiver BGP network device, may indicate whether each BGP network device along the first path from the first other BGP network device prior to the receiver BGP network device to the originator BGP network device supports the non-transitive attribute and the metric data element format for the metric type. For example, when the first continuity information is a first continuity bit that has a value of "0" (zero), each BGP network device along the first path, from a first other BGP network device (e.g., that sent the first message to the receiver BGP network device) to the originator BGP network device, supports the non-transitive attribute and the metric data element format for the metric type. As an alternative example, when the first continuity information is a first continuity bit that has a value of "1" (one), at least one BGP network device along the first path, from the first other BGP network device (e.g., that sent the first message to the receiver BGP network device) to the originator BGP network device, does not support the non-transitive attribute and the metric data element format for the metric type. Notably, once the first continuity bit was set to "1" one by a BGP network device along the first path, each subsequent BGP network device along the first path recommitted the first continuity bit (e.g., as "1" (one)) to ensure that the first continuity bit indicates that at least one BGP network device along the first path does not support the non-transitive attribute and the metric data element format for the metric type.

As shown by reference number 110, the receiver BGP network device may determine first path information associated with the first path (e.g., from the receiver BGP network device to the originator BGP network device, via the first other BGP network device and, when present, the one or more additional first other BGP network devices). The first path information may indicate an accumulated first metric value (e.g., an accumulated cost or an accumulated benefit) for the metric type associated with the first path. For example, the receiver BGP network device may process the first message (e.g., by reading and/or parsing the first message) to determine the first metric value of the first message (e.g., that includes an accumulated first metric value of the BGP network devices along the first path prior to the receiver BGP network device) and may add, to the first metric value, a metric value for the metric type that is associated with the connection between the receiver BGP network device and the first other BGP network device that sent the first message to the receiver BGP network device. In some implementations, the first path information may also indicate whether the first accumulated metric value is a full accumulated metric value (e.g., a full accumulated cost or a full accumulated benefit) or a partial accumulated metric value (e.g., a partial accumulated cost or a partial accumulated benefit). For example, the receiver BGP network device may process the first message (e.g., by reading and/or parsing the first message) to determine the first continuity information of the first message. The receiver BGP network device may thereby cause the first path information to indicate that the first accumulated metric value is a full accumulated metric value when the first continuity information indicates that each BGP network device along the first path supports the non-transitive attribute and the metric data element format for the metric type (e.g., the first continuity bit has a value of "0" (zero)), and may cause the first path information to indicate that the first accumulated metric value is a partial accumulated metric value when the first continuity information indicates that at least one BGP network device along the first path does not support at least one of the non-transitive attribute or the metric data element format for the metric type (e.g., the first continuity bit has a value of "1" (one)).

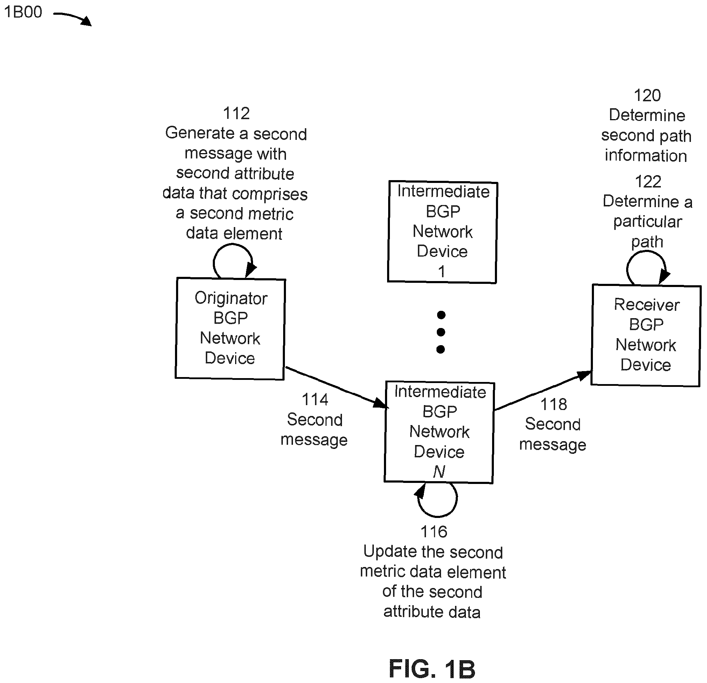

As shown in Fig. 1B, and by reference number 112, the originator BGP network device may generate a second message. The second message may be, for example, a BGP update message or another type of message that includes availability information associated with the originator BGP network device. In some implementations, the second message may include second attribute data associated with the non-transitive attribute (e.g., the AIGP attribute, or another type of non-transitive attribute). The second attribute data may include a second metric data element that is associated with the metric data element format (e.g., the AIGP sub-attribute TLV, or another type of metric data element format). The second metric data element may indicate the metric type (e.g., the same metric type as that indicated by the first metric data element described herein in relation to Fig. 1A), a second metric value (e.g., a quantitative value or amount of the metric type associated with the originator BGP network device), and/or second continuity information (e.g., a second continuity "bit," such as set to a value of "0" (zero), or another indicator, that indicates that the originator BGP network device supports the non-transitive attribute and the metric data element format for the metric type). Accordingly, the second message may include an AIGP attribute that includes an AIGP sub-attribute TLV that comprises continuity information that indicates that the originator BGP network device supports both the AIGP attribute and the AIGP sub-attribute TLV (e.g., for a metric type indicated by the AIGP sub-attribute TLV).

Notably, the second attribute data may include one or more other second metric data elements (e.g., that are similar to the second metric data element, but that indicate different metric types, metric vales, and continuity information). For example, the second message may include an AIGP attribute that includes one or more AIGP sub-attribute TLV (e.g., that are each associated with different respective metric types). While additional details described herein are directed to only the second metric data element, each BGP network device described may treat the one or more other second metric data elements in a similar manner.

As shown by reference number 114, the originator BGP network device may send the second message. The originator BGP network device may send the second message to a second other BGP network device, such as the intermediate BGP network device N shown in Fig. 1B. The originator BGP network device may send the second message to the second other BGP network device via a connection between the originator BGP network device and the second other BGP network device. Accordingly, the second other BGP network device may receive the second message from the originator BGP network device (e.g., via the connection between the originator BGP network device and the second other BGP network device).

As shown by reference number 116, the second other BGP network device (e.g., the intermediate BGP network device N shown in Fig. 1B) may update the second metric data element of the second attribute data of the second message. In some implementations, the second other BGP network device may update the second metric value and/or the second continuity information of the second metric data element. For example, when the second other BGP network device supports the non-transitive attribute and the metric data element format, the second other BGP network device may update the second metric value (e.g., by adding, or by "accumulating," a metric value for the metric type that is associated with the connection between the originator BGP network device and the second other BGP network device to the second metric value). The second other BGP network device may also update the second continuity information to cause the second continuity information to indicate that the second other BGP network device, as well as the originator BGP network device, each support the non-transitive attribute and the metric data element format (e.g., for the metric type). When the second continuity information is a second continuity bit, the second other BGP network device may update the second continuity information by recommitting a value of the continuity bit (e.g., recommitting a "0" (zero) as "0" (zero), or a "1" (one) as "1" (one)).

As another example, when the second other BGP network device does not support at least one of the non-transitive attribute or the metric data element format, the second other BGP network device may update (e.g., may only update) the second continuity information to cause the second continuity information to indicate that the second other BGP network device does not support the non-transitive attribute and the metric data element format (e.g., for the metric type). When the second continuity information is a second continuity bit, the second other BGP network device may update the second continuity information by changing a value of the second continuity bit (e.g., changing a "0" (zero) to a "1" (one)).

As shown by reference number 118, the second other BGP network device (e.g., the intermediate BGP network device N) may send the second message. The second other BGP network device may send the second message to the receiver BGP network device, as shown in Fig. 1B. The second other BGP network device may send the second message to the receiver BGP network device via a connection between the second other BGP network device and the receiver BGP network device. Accordingly, the receiver BGP network device may receive the second message from the second other BGP network device (e.g., via the connection between the second other BGP network device and the receiver BGP network device).

In this way, the second message may be forwarded to the receiver BGP network device. While Fig. 1B shows the second message being received and forwarded by a single second other BGP network device, the second message may be received by and forwarded by one or more additional other BGP network devices before being sent to the receiver BGP network device. A second path (e.g., a traffic forwarding path) from the receiver BGP network device to the originator BGP network device then may include the second other BGP network device and, when present, the one or more additional second other BGP network devices.

Accordingly, each of the one or more additional second other BGP network devices may receive, update, and send the second message in a similar manner as that described herein in relation to the second other BGP network device (e.g., in association with reference numbers 114, 116, and 118). In this way, when a particular second other BGP network device of the second path receives the second message from another particular second other BGP network device of the second path, the second continuity information of the second message may indicate whether each BGP network device, along the second path from the other particular second other BGP network device to the originator BGP network device supports, for the metric type, the non-transitive attribute and the metric data element format (e.g., supports the AIGP attribute and the AIGP sub-attribute TLV). For example, when the second continuity information is a second continuity bit that has a value of "0" (zero), each BGP network device along the second path from the other particular second other BGP network device to the originator BGP network device supports the non-transitive attribute and the metric data element format and therefore recommitted the value of the second continuity bit (e.g., recommitted "0" (zero) as "0" (zero)). As an alternative example, when the second continuity information is a second continuity bit that has a value of "1" (one), at least one BGP network device along the second path from the other particular second other BGP network device to the originator BGP network device does not support the non-transitive attribute and the metric data element format and therefore changed the value of the second continuity bit (e.g., from "0" (zero) to "1" (one)).

Further, the second continuity information of the second metric data element of the second message, when received by the receiver BGP network device, may indicate whether each BGP network device along the second path from the second other BGP network device prior to the receiver BGP network device to the originator BGP network device supports the non-transitive attribute and the metric data element format for the metric type. For example, when the second continuity information is a second continuity bit that has a value of "0" (zero), each BGP network device along the second path, from a second other BGP network device (e.g., that sent the second message to the receiver BGP network device) to the originator BGP network device, supports the non-transitive attribute and the metric data element format for the metric type. As an alternative example, when the second continuity information is a second continuity bit that has a value of "1" (one), at least one BGP network device along the second path, from the second other BGP network device (e.g., that sent the second message to the receiver BGP network device) to the originator BGP network device, does not support the non-transitive attribute and the metric data element format for the metric type. Notably, once the second continuity bit was set to "1" one by a BGP network device along the second path, each subsequent BGP network device along the second path recommitted the second continuity bit (e.g., as "1" (one)) to ensure that the second continuity bit indicates that at least one BGP network device along the second path does not support the non-transitive attribute and the metric data element format for the metric type.

As shown by reference number 120, the receiver BGP network device may determine second path information associated with the second path (e.g., from the receiver BGP network device to the originator BGP network device, via the second other BGP network device and, when present, the one or more additional second other BGP network devices). The second path information may indicate an accumulated second metric value (e.g., an accumulated cost or an accumulated benefit) for the metric type associated with the second path. For example, the receiver BGP network device may process the second message (e.g., by reading and/or parsing the second message) to determine the second metric value of the second message (e.g., that includes an accumulated second metric value of the BGP network devices along the second path prior to the receiver BGP network device) and may add, to the second metric value, a metric value for the metric type that is associated with the connection between the receiver BGP network device and the second other BGP network device that sent the second message to the receiver BGP network device. In some implementations, the second path information may also indicate whether the second accumulated metric value is a full accumulated metric value (e.g., a full accumulated cost or a full accumulated benefit) or a partial accumulated metric value (e.g., a partial accumulated cost or a partial accumulated benefit). For example, the receiver BGP network device may process the second message (e.g., by reading and/or parsing the second message) to determine the second continuity information of the second message. The receiver BGP network device may thereby cause the second path information to indicate that the second accumulated metric value is a full accumulated metric value when the second continuity information indicates that each BGP network device along the second path supports the non-transitive attribute and the metric data element format for the metric type (e.g., the second continuity bit has a value of "0" (zero)), and may cause the second path information to indicate that the second accumulated metric value is a partial accumulated metric value when the second continuity information indicates that at least one BGP network device along the second path does not support the non-transitive attribute and the metric data element format for the metric type (e.g., the second continuity bit has a value of "1" (one)).

As shown by reference number 122, the receiver BGP network device may determine a particular path (e.g., a traffic forwarding path) from the receiver BGP network device to the originator BGP network device (e.g., based on the first path information and/or the second path information). In some implementations, the receiver BGP network device may select one of the first path and the second path as the particular path. For example, when the first path information indicates, for the metric type, a first accumulated metric value associated with the first path and that the first accumulated metric value is a full accumulated metric value, and the second path information indicates, for the metric type, a second accumulated metric value associated with the second path and that the second accumulated metric value is a partial accumulated metric value, the receiver BGP network device may select the first path as the particular path. This may be because each BGP network device along the first path supports the non-transitive attribute and the metric data element format for the metric type, and therefore the first accumulated metric value may be considered to be an accumulation of metric values along the entire first path (as compared to the second accumulated metric value, which may be considered to be an accumulation of metric values along only some of the second path).

As another example, when the first path information indicates, for the metric type, a first accumulated metric value associated with the first path and that the first accumulated metric value is a full accumulated metric value, and the second path information indicates, for the metric type, a second accumulated metric value associated with the second path and that the second accumulated metric value is a full accumulated metric value, the receiver BGP network device may select, using a metric value ranking technique, the particular path from the first path and the second path (e.g., because respective costs, or benefits, of the entire first path and the entire second path may be compared with respect to the metric type).

As an additional example, when the first path information indicates, for the metric type, a first accumulated metric value associated with the first path and that the first accumulated metric value is a partial accumulated metric value, and the second path information indicates, for the metric type, a second accumulated metric value associated with the second path and that the second accumulated metric value is a partial accumulated metric value, the receiver BGP network device may select, using a non-ranking technique, the particular path from the first path and the second path (e.g., because respective costs, or benefits, of the entire first path and the entire second path cannot be ascertained with respect to the metric type, and therefore a different selection criterion may be used).

As indicated above, Figs. 1A-1B are provided as an example. Other examples may differ from what is described with regard to Figs. 1A-1B. The number and arrangement of devices shown in Figs. 1A-1B are provided as an example. In practice, there may be additional devices, fewer devices, different devices, or differently arranged devices than those shown in Figs. 1A-1B. Furthermore, two or more devices shown in Figs. 1A-1B may be implemented within a single device, or a single device shown in Figs. 1A-1B may be implemented as multiple, distributed devices. Additionally, or alternatively, a set of devices (e.g., one or more devices) shown in Figs. 1A-1B may perform one or more functions described as being performed by another set of devices shown in Figs. 1A-1B.

Fig. 2 is a diagram of an example environment 200 in which systems and/or methods described herein may be implemented. As shown in Fig. 2, environment 200 may include a group of network devices 210 (shown as network device 210-1 through network device 210-*N*) and a network 220. Devices of environment 200 may interconnect via wired connections, wireless connections, or a combination of wired and wireless connections.

Network device 210 includes one or more devices capable of receiving, processing, storing, routing, and/or providing messages and/or traffic in a manner described herein. For example, network device 210 may include a router, such as a label switching router (LSR), a label edge router (LER), an ingress router, an egress router, a provider router (e.g., a provider edge router or a provider core router), a virtual router, or another type of router. Additionally, or alternatively, network device 210 may include a gateway, a switch, a firewall, a hub, a bridge, a reverse proxy, a server (e.g., a proxy server, a cloud server, or a data center server), a load balancer, and/or a similar device. Network device 210 may be a provider edge (PE) network device, an autonomous system border router (ASBR) network device, or another type of network device associated with one or more ASs. Network device 210 may be a BGP network device (e.g., an originator BGP network device, an intermediate BGP network device, or a receiver BGP network device, as described herein in relation to Figs. 1A-1B). In some implementations, network device 210 may be a physical device implemented within a housing, such as a chassis. In some implementations, network device 210 may be a virtual device implemented by one or more computer devices of a cloud computing environment or a data center.

Network 220 includes one or more wired and/or wireless networks. For example, network 220 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN)), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks. Network 220 may be associated with (e.g., may include) one or more ASs.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

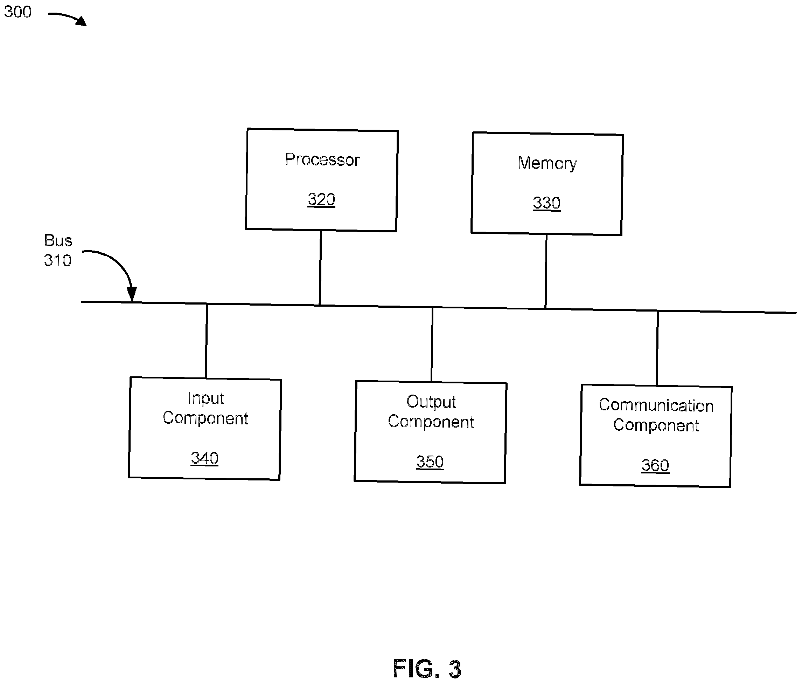

Fig. 3 is a diagram of example components of a device 300 associated with systems and/or methods described herein. The device 300 may correspond to network device 210. In some implementations, network device 210 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

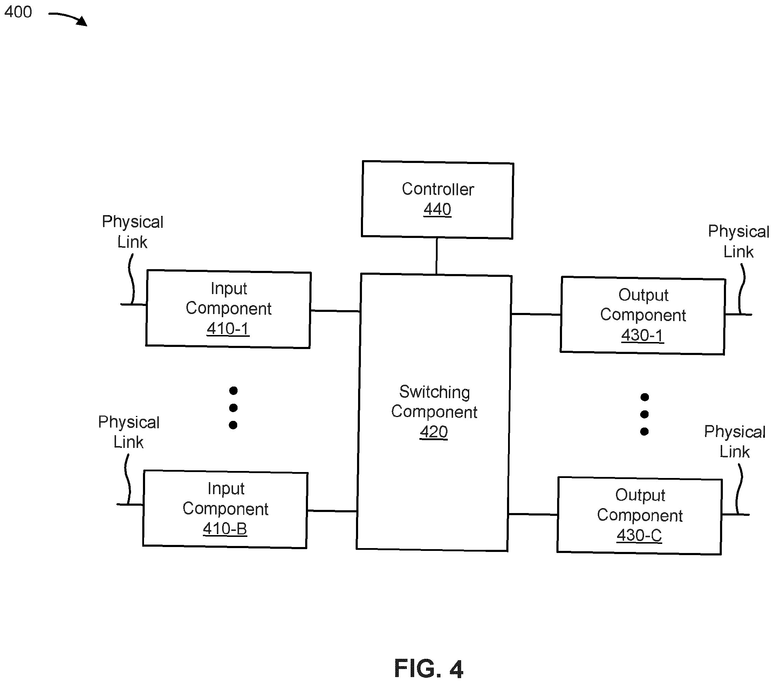

Fig. 4 is a diagram of example components of a device 400 associated with systems and/or methods described herein. Device 400 may correspond to network device 210. In some implementations, network device 210 may include one or more devices 400 and/or one or more components of device 400. As shown in Fig. 4, device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a CPU, a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processor. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions stored by a non-transitory computer-readable medium. A computer-readable medium is defined herein as a non-transitory memory device. A memory device includes memory space within a single physical storage device or memory space spread across multiple physical storage devices.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

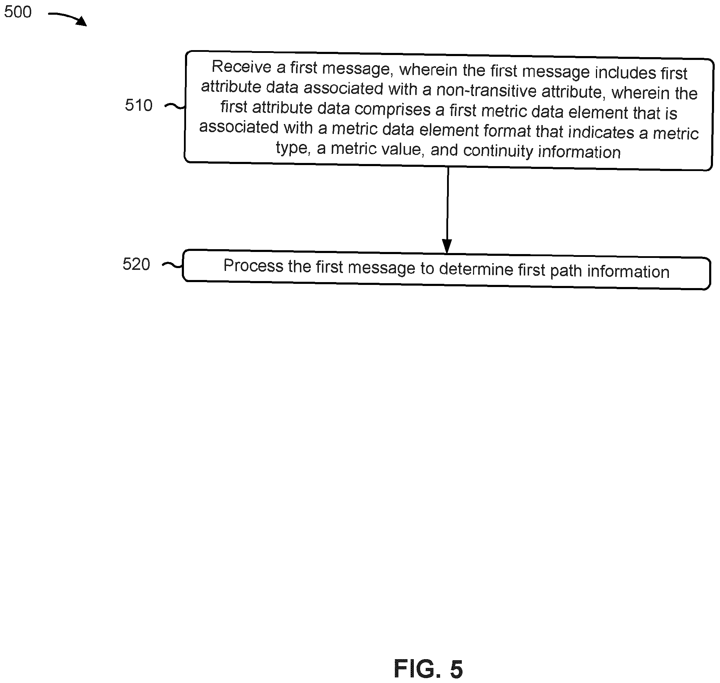

Fig. 5 is a flowchart of an example process 500 associated with continuity information included in a metric data element of a non-transitive attribute. In some implementations, one or more process blocks of Fig. 5 are performed by a BGP network device (e.g., a network device 210 configured as a BGP network device). In some implementations, one or more process blocks of Fig. 5 are performed by another device or a group of devices separate from or including the BGP network device, such as another BGP network device (e.g., another network device 210 configured as another BGP network device). Additionally, or alternatively, one or more process blocks of Fig. 5 may be performed by one or more components of device 300, such as processor 320, memory 330, input component 340, output component 350, and/or communication component 360; of device 400, such as input component 410, switching component 420, output component 430, and/or controller 440; and/or of another device.

As shown in Fig. 5, process 500 may include receiving a first message, wherein the first message includes first attribute data associated with a non-transitive attribute, wherein the first attribute data comprises a first metric data element that is associated with a metric data element format and that indicates a metric type, a metric value, and continuity information (block 510). For example, the BGP network device may receive from an originator BGP network device via a first other BGP network device, a first message, wherein the first message includes first attribute data associated with a non-transitive attribute, wherein the first attribute data comprises a first metric data element that is associated with a metric data element format and that indicates a metric type, a metric value, and continuity information, as described above. In some implementations, the first message includes first attribute data associated with a non-transitive attribute, wherein the first attribute data comprises a first metric data element that is associated with a metric data element format and that indicates a metric type, a metric value, and continuity information.

As further shown in Fig. 5, process 500 may include processing the first message to determine first path information (block 520). For example, the BGP network device may process the first message to determine first path information, as described above. The first path information may be associated with a first path from the BGP network device to the originator BGP network device via the first other BGP network device.

Process 500 may include additional implementations, such as any single implementation or any combination of implementations described below and/or in connection with one or more other processes described elsewhere herein.

In a first implementation, the non-transitive attribute is an AIGP attribute and the metric data element format is a TLV.

In a second implementation, alone or in combination with the first implementation, the continuity information of the first metric data element indicates whether each BGP network device, of a plurality of BGP network devices that includes the first other BGP network device and the originator BGP network device, along the first path from the BGP network device to the originator BGP network device supports the non-transitive attribute and the metric data element format for the metric type.

In a third implementation, alone or in combination with one or more of the first and second implementations, the first path information indicates an accumulated metric value for the metric type associated with the first path and whether the accumulated metric value is a full accumulated metric value or a partial accumulated metric value.

In a fourth implementation, alone or in combination with one or more of the first through third implementations, process 500 includes determining, based on the first path information, a particular path from the BGP network device to the originator BGP network device.

In a fifth implementation, alone or in combination with one or more of the first through fourth implementations, process 500 includes receiving, from the originator BGP network device via a second other BGP network device, a second message, wherein the second message includes second attribute data associated with the non-transitive attribute, wherein the second attribute data comprises a second metric data element that is associated with the metric data element format; and processing the second message to determine second path information associated with a second path from the BGP network device to the originator BGP network device via the second other BGP network device.

In a sixth implementation, alone or in combination with one or more of the first through fifth implementations, the first path information indicates, for a particular metric type, a first accumulated metric value associated with the first path and whether the first accumulated metric value is a full accumulated metric value or a partial accumulated metric value, and the second path information indicates, for the particular metric type, a second accumulated metric value associated with the second path and whether the second accumulated metric value is a full accumulated metric value or a partial accumulated metric value.

In a seventh implementation, alone or in combination with one or more of the first through sixth implementations, process 500 includes selecting, based on the first path information and the second path information, one of the first path and the second path as a particular path from the BGP network device to the originator BGP network device.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

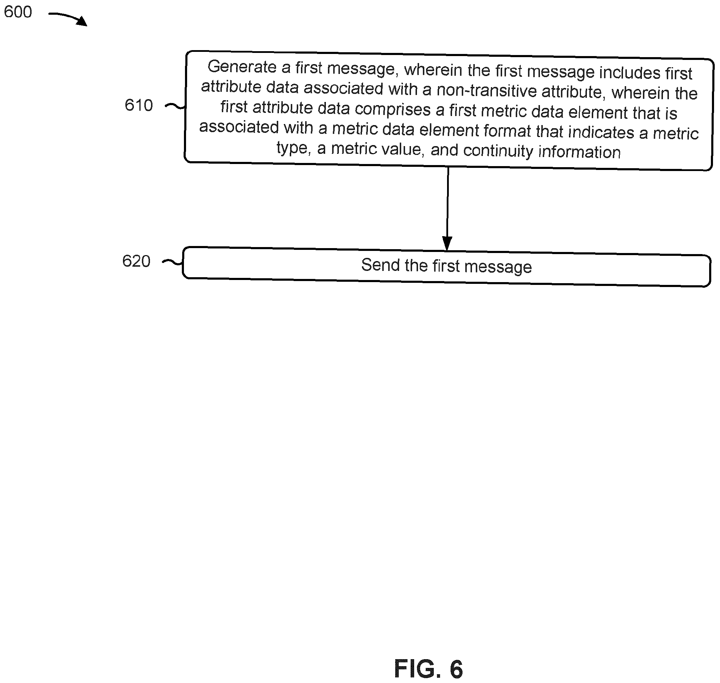

Fig. 6 is a flowchart of an example process 600 associated with continuity information included in metric data element of a non-transitive attribute. In some implementations, one or more process blocks of Fig. 6 are performed by a BGP network device (e.g., a network device 210 configured as an originator BGP network device). In some implementations, one or more process blocks of Fig. 6 are performed by another device or a group of devices separate from or including the BGP network device, such as another BGP network device (e.g., another network device 210 configured as another BGP network device). Additionally, or alternatively, one or more process blocks of Fig. 6 may be performed by one or more components of device 300, such as processor 320, memory 330, input component 340, output component 350, and/or communication component 360; of device 400, such as input component 410, switching component 420, output component 430, and/or controller 440; and/or of another device.

As shown in Fig. 6, process 600 may include generating a first message that includes first attribute data associated with a non-transitive attribute, wherein the first attribute data comprises a first metric data element that is associated with a metric data element format and that indicates a metric type, a metric value, and continuity information (block 610). For example, the BGP network device may generate a first message that includes first attribute data associated with a non-transitive attribute, wherein the first attribute data comprises a first metric data element that is associated with a metric data element format and that indicates a metric type, a metric value, and continuity information, as described above. In some implementations, the first attribute data comprises a first metric data element that is associated with a metric data element format and that indicates a metric type, a metric value, and continuity information.

As further shown in Fig. 6, process 600 may include sending the first message (block 620). For example, the BGP network device may send the first message to a first other BGP network device, as described above.

Process 600 may include additional implementations, such as any single implementation or any combination of implementations described below and/or in connection with one or more other processes described elsewhere herein.

In a first implementation, the non-transitive attribute is an AIGP attribute and the metric data element format is a TLV.

In a second implementation, alone or in combination with the first implementation, the continuity information of the first metric data element indicates that the BGP network device supports the non-transitive attribute and the metric data element format for the metric type.

In a third implementation, alone or in combination with one or more of the first and second implementations, sending the first message to the first other BGP network device allows the first other BGP network device to determine first path information associated with a first path from the first other BGP network device to the BGP network device.

In a fourth implementation, alone or in combination with one or more of the first through third implementations, sending the first message to the first other BGP network device allows the first other BGP network device to update the first metric data element of the first attribute data of the first message.

In a fifth implementation, alone or in combination with one or more of the first through fourth implementations, process 600 includes generating a second message that includes second attribute data associated with the non-transitive attribute, wherein the second attribute data comprises a second metric data element that is associated with the metric data element format, and sending the second message to a second other BGP network device.

In a sixth implementation, alone or in combination with one or more of the first through fifth implementations, each of the first metric data element and the second metric data element indicate that the BGP network device supports the non-transitive attribute and the metric data element format for the metric type.

Although Fig. 6 shows example blocks of process 600, in some implementations, process 600 includes additional blocks, fewer blocks, different blocks, or differently arranged blocks than those depicted in Fig. 6. Additionally, or alternatively, two or more of the blocks of process 600 may be performed in parallel.

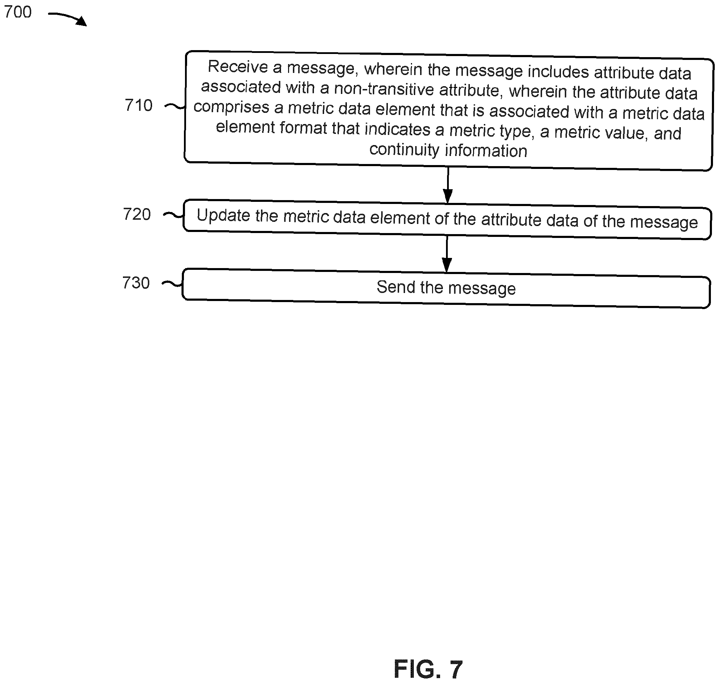

Fig. 7 is a flowchart of an example process 700 associated with continuity information included in metric data element of a non-transitive attribute. In some implementations, one or more process blocks of Fig. 7 are performed by a BGP network device (e.g., a network device 210 configured as a BGP network device). In some implementations, one or more process blocks of Fig. 7 are performed by another device or a group of devices separate from or including the BGP network device, such as another BGP network device (e.g., another network device 210 configured as another BGP network device). Additionally, or alternatively, one or more process blocks of Fig. 7 may be performed by one or more components of device 300, such as processor 320, memory 330, input component 340, output component 350, and/or communication component 360; of device 400, such as input component 410, switching component 420, output component 430, and/or controller 440; and/or of another device.

As shown in Fig. 7, process 700 may include receiving a message, wherein the message includes attribute data associated with a non-transitive attribute, wherein the attribute data comprises a metric data element that is associated with a metric data element format that indicates a metric type, a metric value, and continuity information (block 710). For example, the BGP network device may receive, from an originator BGP network device, a message, wherein the message includes attribute data associated with a non-transitive attribute, wherein the attribute data comprises a metric data element that is associated with a metric data element format that indicates a metric type, a metric value, and continuity information, as described above.

As further shown in Fig. 7, process 700 may include updating the metric data element of the attribute data of the message (block 720). For example, the BGP network device may update the metric data element of the attribute data of the message, as described above.

As further shown in Fig. 7, process 700 may include sending the message to another BGP network device (block 730). For example, the BGP network device may send the message to another BGP network device, as described above.

Process 700 may include additional implementations, such as any single implementation or any combination of implementations described below and/or in connection with one or more other processes described elsewhere herein.

In a first implementation, the non-transitive attribute is an AIGP attribute and the metric data element format is a TLV.

In a second implementation, alone or in combination with the first implementation, the continuity information of the metric data element, prior to updating the metric data element, indicates whether each BGP network device along a path from the BGP network device to the originator BGP network device supports the non-transitive attribute and the metric data element format for the metric type.

In a third implementation, alone or in combination with one or more of the first and second implementations, process 700 includes updating at least the continuity information of the metric data element.

In a fourth implementation, alone or in combination with one or more of the first through third implementations, sending the message to the other BGP network device allows the other BGP network device to determine path information associated with a path from the other BGP network device to the originator BGP network device via the BGP network device.

Although Fig. 7 shows example blocks of process 700, in some implementations, process 700 includes additional blocks, fewer blocks, different blocks, or differently arranged blocks than those depicted in Fig. 7. Additionally, or alternatively, two or more of the blocks of process 700 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

Thus, from one perspective, there has now been described a border gateway protocol (BGP) network device may receive from an originator BGP network device via a first other BGP network device, a first message, wherein the first message includes first attribute data associated with a non-transitive attribute, wherein the first attribute data comprises a first metric data element that is associated with a metric data element format and that indicates a metric type, a metric value, and continuity information. The BGP may process the first message to determine first path information associated with a first path from the BGP network device to the originator BGP network device via the first other BGP network device.

Further examples of feature combinations taught by the present disclosure are set out in the following numbered clauses:
1. A method, comprising:
   receiving, by a border gateway protocol, BGP, network device, from an originator BGP network device via a first other BGP network device, a first message,
      wherein the first message includes first attribute data associated with a non-transitive attribute,
      wherein the first attribute data comprises a first metric data element that is associated with a metric data element format and that indicates a metric type, a metric value, and continuity information; and
   processing, by the BGP network device, the first message to determine first path information associated with a first path from the BGP network device to the originator BGP network device via the first other BGP network device.
2. The method of clause 1, wherein the non-transitive attribute is an accumulated interior gateway protocol, AIGP, attribute and the metric data element format is a type-length-value, TLV.
3. The method of clause 1 or 2, wherein the continuity information of the first metric data element is a continuity bit that indicates, when set to a first value, that each BGP network device, of a plurality of BGP network devices that includes the first other BGP network device and the originator BGP network device, along the first path from the BGP network device to the originator BGP network device supports the non-transitive attribute and the metric data element format for the metric type, or, when set to a second value, that at least one BGP network device along the first path does not support the non-transitive attribute and the metric data element.
4. The method of clause 1, 2 or 3, wherein the first path information indicates an accumulated metric value for the metric type associated with the first path and whether the accumulated metric value is a full accumulated metric value or a partial accumulated metric value.
5. The method of any preceding clause, further comprising:
   determining, based on the first path information, a particular path from the BGP network device to the originator BGP network device.
6. The method of any preceding clause, further comprising:
   receiving, from the originator BGP network device via a second other BGP network device, a second message,
      wherein the second message includes second attribute data associated with the non-transitive attribute,
      wherein the second attribute data comprises a second metric data element that is associated with the metric data element format; and
   processing the second message to determine second path information associated with a second path from the BGP network device to the originator BGP network device via the second other BGP network device.
7. The method of clause 6, wherein:
   the first path information indicates, for a particular metric type, a first accumulated metric value associated with the first path and whether the first accumulated metric value is a full accumulated metric value or a partial accumulated metric value; and
   the second path information indicates, for the particular metric type, a second accumulated metric value associated with the second path and whether the second accumulated metric value is a full accumulated metric value or a partial accumulated metric value.
8. The method of clause 6 or 7, further comprising:
   selecting, based on the first path information and the second path information, one of the first path and the second path as a particular path from the BGP network device to the originator BGP network device.
9. A border gateway protocol, BGP, network device, comprising:
   one or more memories; and
   one or more processors to:
      generate a first message that includes first attribute data associated with a non-transitive attribute,
      wherein the first attribute data comprises a first metric data element that is associated with a metric data element format and that indicates a metric type, a metric value, and continuity information; and
      send the first message to a first other BGP network device.
10. The BGP network device of clause 9, wherein the non-transitive attribute is an accumulated interior gateway protocol, AIGP, attribute and the metric data element format is a type-length-value, TLV.
11. The BGP network device of clause 9 or 10, wherein the continuity information of the first metric data element is a continuity bit that indicates that the BGP network device supports the non-transitive attribute and the metric data element format for the metric type.
12. The BGP network device of clause 9, 10 or 11, wherein sending the first message to the first other BGP network device allows the first other BGP network device to determine first path information associated with a first path from the first other BGP network device to the BGP network device.
13. The BGP network device of any of clauses 9-12, wherein sending the first message to the first other BGP network device allows the first other BGP network device to update the first metric data element of the first attribute data of the first message.
14. The BGP network device of any of clauses 9-13, wherein the one or more processors are further to:
   generate a second message that includes second attribute data associated with the non-transitive attribute,
      wherein the second attribute data comprises a second metric data element that is associated with the metric data element format; and
   send the second message to a second other BGP network device.
15. The BGP network device of clause 14, wherein each of the first metric data element and the second metric data element indicate that the BGP network device supports the non-transitive attribute and the metric data element format for the metric type.
16. A computer-readable medium comprising a set of computer-implementable instructions, the set of computer-implementable instructions comprising:
   one or more instructions that, when executed by one or more processors of a border gateway protocol, BGP, network device, cause the BGP network device to:
   receive, from an originator BGP network device, a message,
      wherein the message includes attribute data associated with a non-transitive attribute,
      wherein the attribute data comprises a metric data element that is associated with a metric data element format that indicates a metric type, a metric value, and continuity information;
   update the metric data element of the attribute data of the message; and
   send the message to another BGP network device.
17. The computer-readable medium of clause 16, wherein the non-transitive attribute is an accumulated interior gateway protocol, AIGP, attribute and the metric data element format is a type-length-value, TLV.
18. The computer-readable medium of clause 16 or 17, wherein the continuity information of the metric data element, prior to updating the metric data element, indicates whether each BGP network device along a path from the BGP network device to the originator BGP network device supports the non-transitive attribute and the metric data element format for the metric type.
19. The computer-readable medium of clause 16, 17 or 18, wherein the one or more instructions, that cause the BGP network device to update the metric data element of the attribute data of the message, cause the BGP network device to:
   update at least the continuity information of the metric data element.
20. The computer-readable medium of any of clauses 16-19, wherein sending the message to the other BGP network device allows the other BGP network device to determine path information associated with a path from the other BGP network device to the originator BGP network device via the BGP network device.

## Claims

1. A method, comprising:
receiving, by a border gateway protocol, BGP, network device, from an originator BGP network device via a first other BGP network device, a first message,
wherein the first message includes first attribute data associated with a non-transitive attribute,
wherein the first attribute data comprises a first metric data element that is associated with a metric data element format and that indicates a metric type, a metric value, and continuity information; and
processing, by the BGP network device, the first message to determine first path information associated with a first path from the BGP network device to the originator BGP network device via the first other BGP network device.

2. The method of claim 1, wherein the non-transitive attribute is an accumulated interior gateway protocol, AIGP, attribute and the metric data element format is a type-length-value, TLV.

3. The method of claim 1 or 2, wherein the continuity information of the first metric data element is a continuity bit that indicates, when set to a first value, that each BGP network device, of a plurality of BGP network devices that includes the first other BGP network device and the originator BGP network device, along the first path from the BGP network device to the originator BGP network device supports the non-transitive attribute and the metric data element format for the metric type, or, when set to a second value, that at least one BGP network device along the first path does not support the non-transitive attribute and the metric data element.

4. The method of claim 1, 2 or 3, wherein the first path information indicates an accumulated metric value for the metric type associated with the first path and whether the accumulated metric value is a full accumulated metric value or a partial accumulated metric value.

5. The method of any preceding claim, further comprising:
determining, based on the first path information, a particular path from the BGP network device to the originator BGP network device.

6. The method of any preceding claim, further comprising:
receiving, from the originator BGP network device via a second other BGP network device, a second message,
wherein the second message includes second attribute data associated with the non-transitive attribute,
wherein the second attribute data comprises a second metric data element that is associated with the metric data element format; and
processing the second message to determine second path information associated with a second path from the BGP network device to the originator BGP network device via the second other BGP network device.

7. The method of claim 6, wherein:
the first path information indicates, for a particular metric type, a first accumulated metric value associated with the first path and whether the first accumulated metric value is a full accumulated metric value or a partial accumulated metric value; and
the second path information indicates, for the particular metric type, a second accumulated metric value associated with the second path and whether the second accumulated metric value is a full accumulated metric value or a partial accumulated metric value.

8. The method of claim 6 or 7, further comprising:
selecting, based on the first path information and the second path information, one of the first path and the second path as a particular path from the BGP network device to the originator BGP network device.

9. A border gateway protocol, BGP, network device, comprising:
one or more memories; and
one or more processors to:
generate a first message that includes first attribute data associated with a non-transitive attribute,
wherein the first attribute data comprises a first metric data element that is associated with a metric data element format and that indicates a metric type, a metric value, and continuity information; and
send the first message to a first other BGP network device.

10. The BGP network device of claim 9, wherein the continuity information of the first metric data element is a continuity bit that indicates that the BGP network device supports the non-transitive attribute and the metric data element format for the metric type.

11. The BGP network device of claim 9 or 10, wherein sending the first message to the first other BGP network device allows the first other BGP network device to determine first path information associated with a first path from the first other BGP network device to the BGP network device.

12. The BGP network device of any of claims 9-11, wherein sending the first message to the first other BGP network device allows the first other BGP network device to update the first metric data element of the first attribute data of the first message.

13. The BGP network device of any of claims 9-12, wherein the one or more processors are further to:
generate a second message that includes second attribute data associated with the non-transitive attribute,
wherein the second attribute data comprises a second metric data element that is associated with the metric data element format; and
send the second message to a second other BGP network device.

14. The BGP network device of claim 13, wherein each of the first metric data element and the second metric data element indicate that the BGP network device supports the non-transitive attribute and the metric data element format for the metric type.

15. A computer-readable medium comprising a set of computer-implementable instructions, the set of computer-implementable instructions comprising:
one or more instructions that, when executed by one or more processors of a border gateway protocol, BGP, network device, cause the BGP network device to:
receive, from an originator BGP network device, a message,
wherein the message includes attribute data associated with a non-transitive attribute,
wherein the attribute data comprises a metric data element that is associated with a metric data element format that indicates a metric type, a metric value, and continuity information;
update the metric data element of the attribute data of the message; and
send the message to another BGP network device.
